# EUROPÄISCHE PATENTSCHRIFT

(11) **EP 3 771 385 B1**
(45) Veröffentlichungstag und Bekanntmachung des Hinweises auf die Patenterteilung: **28.01.2026**
(21) Anmeldenummer: 20185032.8
(22) Anmeldetag: 09.07.2020
(51) Int. Cl.: A47J 43/07

(54) **VERSCHLUSSBECHER UND DECKEL FÜR EINE KÜCHENMASCHINE SOWIE KÜCHENMASCHINE MIT DECKEL**
CLOSURE CONTAINER AND LID FOR KITCHEN APPLIANCE AND KITCHEN APPLIANCE WITH LID
GOBELET DE FERMETURE ET COUVERCLE POUR ROBOT DE CUISINE, AINSI QUE ROBOT DE CUISINE DOTÉ D'UN COUVERCLE

(30) Priorität: 30.07.2019 DE 102019211300
(43) Veröffentlichungstag der Anmeldung: 03.02.2021
(73) Patentinhaber: BSH Hausgeräte GmbH, 81739 München (DE)
(72) Erfinder: Habe, Mitja, 3320 Velenje (SI); Enci, David, 3331 Nazarje (SI); Ziegler, Felicitas, 83371 Stein a.d. Traun (DE)

(56) Entgegenhaltungen:
- EP-A1- 3 517 003
- DE-A1- 102010 017 387
- DE-U1- 202018 100 265

## Beschreibung

Die vorliegende Erfindung betrifft einen Verschlussbecher, der dazu eingerichtet bzw. vorgesehen ist, in die Öffnung eines Deckelkranzes für ein Gefäß einer Küchenmaschine mit Heizfunktion eingesetzt zu werden. Darüber hinaus betrifft die Erfindung einen Deckel für ein Gefäß einer Küchenmaschine, der einen Deckelkranz und einen in dessen Öffnung einsetzbaren Verschlussbecher umfasst. Weiterhin betrifft die vorliegende Erfindung eine Küchenmaschine mit einem Gefäß, das einen derartigen Deckel aufweist.

Küchenmaschinen mit Heizfunktion stellen eine kompakte Möglichkeit zum Erhitzen von Lebensmitteln dar. Derartige Küchenmaschinen umfassen in der Regel ein Gefäß, in das jeweilige Lebensmittel eingefüllt werden können, sowie eine Basisstation. Das Gefäß weist üblicherweise einen abnehmbaren oder abklappbaren Deckel auf, der häufig einen Deckelkranz mit einer Öffnung sowie einen in die Öffnung einsetzbaren Verschlussbecher umfasst. Beim Zubereiten, insbesondere Erhitzen von Speisen im Gefäß kann der Verschlussbecher separat abgenommen werden, beispielsweise um durch die Öffnung hindurch Zutaten in das Gefäß zu geben.

Je nachdem, ob viel oder wenig Dampf entweichen können soll und damit, ob eine geringere oder eine höhere Energieeffizienz angestrebt wird, kann die die Heizfunktion mit abgenommenem oder eingesetztem Verschlussbecher genutzt werden.

Wird ein Lebensmittel, insbesondere eine Flüssigkeit im Gefäß mit eingesetztem Verschlussbecher erhitzt, wird durch entstehenden Dampf ein erhöhter Druck im Gefäß erzeugt. Ein Spalt zwischen dem Verschlussbecher und dem Deckelkranz, durch den Dampf entweichen kann, dient dann einem Druckausgleich.

So offenbaren insbesondere die Dokumente EP 3 517 003 A1 und DE 10 2010 017387 A1 jeweils einen Verschlussbecher für eine Öffnung eines Deckelkranzes einer Küchenmaschine, bei dem Dampf über einen Spalt zwischen dem Verschlussbecher und dem Deckelkranz entweichen kann.

Dadurch entsteht jedoch die Gefahr von Verbrennungen eines Anwenders, beispielsweise in einer Situation, in der er den Deckelkranz mit eingesetztem Verschlussbecher abnehmen möchte.

Der vorliegenden Erfindung liegt die Aufgabe zugrunde, eine Technik bereitzustellen, mit der die Sicherheit eines Anwenders einer Küchenmaschine mit Heizfunktion erhöht wird.

Die Aufgabe wird gelöst durch einen Verschlussbecher gemäß Anspruch 1, einen Deckel nach Anspruch 7 und eine Küchenmaschine gemäß Anspruch 10. Vorteilhafte Ausführungsformen sind in den Unteransprüchen, der Beschreibung und den Figuren offenbart.

Ein erfindungsgemäßer Verschlussbecher ist dazu eingerichtet, in eine Öffnung eines (passenden) Deckelkranzes eines Gefäßes als Teil einer Küchenmaschine mit Heizfunktion eingesetzt zu werden, so dass also mindestens ein Bereich des Verschlussbechers, der im Folgenden als "Einsetzbereich" bezeichnet wird, in der Öffnung versenkt wird. Der Einsetzbereich des Verschlussbechers erstreckt sich vorzugsweise vom Boden des Bechers (im Folgenden als "Becherboden" bezeichnet) bis zum Kragen.

Der Verschlussbecher weist einen von seiner Becherwand nach außen (also entgegengesetzt zum Innenraum des Verschlussbechers) abstehenden Kragen auf, der in mindestens einem Bereich unterbrochen und/oder zumindest verschmälert ist. Vorzugsweise umläuft der Kragen die Becherwand zumindest teilweise.

Die Unterbrechung bzw. Verschmälerung des Kragens ist dazu vorgesehen, beim Betrieb der Küchenmaschine und bei eingesetztem Verschlussbecher ein Entweichen im Gefäß entstandenen Dampfes (und damit einen Druckausgleich) zwischen dem Deckelkranz und dem Verschlussbecher hindurch zu ermöglichen; der genannte Bereich wird daher im Folgenden als "vorgesehener Dampfdurchlassbereich" bezeichnet.

Der Verschlussbecher weist weiterhin mindestens zwei Stege auf, die ebenfalls von der Becherwand nach außen abstehen und die jeweils vom Kragen ausgehend (beispielsweise schräg, senkrecht, gekrümmt und/oder mit mindestens einem Knick) zu einer Bodenseite des Verschlussbechers hin verlaufen: Eine jeweilige Längsrichtung der Stege hat also in mindestens einem Abschnitt eine Richtungskomponente, die zu einer Unterseite (als äußerer Bodenfläche) des Verschlussbechers weist. Jeder der Stege kann jeweils bis zum Becherboden reichen oder oberhalb des Bodens enden; orientierungsabhängige Angaben wie hier "oberhalb" und "Unterseite", aber auch beispielsweise "versenkt", "aufsteigen", "nach oben", "herunter", "unterhalb", "seitlich" u.Ä. beziehen sich in dieser Schrift stets auf eine bestimmungsgemäße (vorgesehene) Verwendungsausrichtung des Gefäßes bzw. der Küchenmaschine bzw. des Verschlussbechers in seinem bestimmungsgemäß eingesetzten Zustand (in dem der Becherboden vorzugsweise horizontal angeordnet ist); zur besseren Lesbarkeit wird dies nicht immer ergänzend angegeben.

Ein derartiger, erfindungsgemäßer Verschlussbecher ist einfach einzusetzen und herzustellen, beispielsweise aus Kunststoff mittels Spritzgusses. Seine genannte erfindungsgemäße geometrische Form bewirkt in seinem eingesetztem Zustand, dass Dampf, der beim Betrieb der Küchenmaschine im Gefäß entsteht und aufsteigt, zum einen durch den Kragen zurückgehalten wird und so nur oder zumindest hauptsächlich im Dampfdurchlassbereich entweichen kann. Darüber hinaus bilden die Stege Barrieren für am Kragen entlanglaufende Dampfströmungen (in den entsprechenden Bereichen); der Dampf kann damit nicht flach am Kragen entlang in den Dampfdurchlassbereich strömen; im Folgenden werden die Stege aus diesem Grunde als "Barrierestege" bezeichnet.

Sie ermöglichen somit, dass Dampf, ehe er durch den Dampfdurchlassbereich austreten und so für einen Druckausgleich zwischen dem Inneren des Gefäßes und dessen Umgebung sorgen kann, steil aus dem Gefäßinneren aufsteigt und nicht flach zum Dampfdurchlassbereich hinströmt. Als Konsequenz ist auch der ausgetretene Dampf im Wesentlichen nach oben gerichtet. Insbesondere kann somit der Dampfstrom kontrolliert und von Bereichen ferngehalten werden, die der Anwender häufig anfassen wird, wie beispielsweise Griffe an der Peripherie des Deckelkranzes. Dadurch kann die Sicherheit des Anwenders bei Verwendung des Gefäßes erhöht werden.

Die Barrierestege können sich vorzugsweise jeweils mindestens um 50% oder mindestens 60% und/oder höchstens 85% oder um höchstens 75% eines Abstandes von Kragen und Becherboden zu diesem hin erstrecken. Dies ermöglicht einerseits eine vorteilhafte Effizienz als Barriere, andererseits erlaubt es (in entsprechenden Ausführungsformen des Deckelkranzes, s.u.), dass Dampf noch in einem Spalt zwischen dem Verschlussbecher und einem einen Aufnahmeschacht begrenzenden Rand des Deckelkranzes unter den Barrierestegen hindurch in den Dampfdurchlassbereich eintreten kann, also nicht ganz in das Gefäßinnere (nach unten aus dem Spalt heraus) gelenkt wird.

Ein erfindungsgemäßer Deckel ist für ein Gefäß einer Küchenmaschine vorgesehen, die eine Heizfunktion aufweist. Er umfasst einen erfindungsgemäßen Verschlussbecher gemäß einer der in dieser Schrift offenbarten Ausführungsformen sowie einen Deckelkranz, der dazu vorgesehen bzw. eingerichtet ist, (z.B. separat und/oder innerhalb eines (beispielsweise klappbaren) Schließrings, der zum erfindungsgemäßen Deckel gehören kann) auf das Gefäß aufgesetzt zu werden. Der Verschlussbecher ist dazu eingerichtet, in eine Öffnung im Deckelkranz abnehmbar eingesetzt, mit seinem Einsetzbereich also in der Öffnung versenkt zu werden.

Vorzugsweise ist die Öffnung zentral im Deckelkranz angeordnet und/oder rund ausgebildet. Der Verschlussbecher ist im eingesetzten Zustand vorzugsweise frei in der Öffnung drehbar (insbesondere um 360° und/oder in beide Richtungen). Eine zugehörige Drehachse verläuft dabei vorzugsweise senkrecht zum Becherboden des Verschlussbechers bzw. zu einer Ebene, entlang der sich der Becherboden erstreckt.

Der Deckelkranz kann einteilig oder mehrteilig ausgebildet sein. Insbesondere kann er zwei oder mehr koaxial zusammensetzbare Ringe umfassen.

Gemäß vorteilhaften Ausführungsformen wird die Öffnung im Deckelkranz von einem Aufnahmeschacht für den Verschlussbecher ausgebildet. Der Deckelkranz weist dann also einen Rand auf, der im aufgesetzten Zustand des Deckelkranzes von einer einem Gefäßboden entgegengesetzten Abdeckfläche des Deckelkranzes ins Innere des Gefäßes hinein (zu dessen Gefäßboden hin) absteht. Insbesondere verläuft der den Aufnahmeschacht begrenzende Rand im eingesetzten Zustand des Verschlussbechers vorzugsweise an dessen Becherwand entlang.

Der Rand bewirkt insbesondere, dass Dampf, der bei Verwendung der Heizfunktion unter der Abdeckfläche entlangströmt, von der Öffnung ferngehalten und in Richtung des Gefäßbodens umgelenkt wird, so dass nur im Wesentlichen vertikal aufsteigender Dampf in einen Zwischenraum zwischen Deckelkranz und Verschlussbecher und schließlich in den Dampfaustrittsbereich gelangt. Ein flach austretender Dampfstrom insbesondere zu seitlich am Gefäß oder Deckel angeordneten Griffelementen hin wird somit verhindert oder zumindest vermindert, was einen Anwender vor Verbrennungen schützt.

Am einen solchen Aufnahmeschacht begrenzenden Rand kann eine Gitterstruktur ausgebildet sein, auf der der Becherboden des Verschlussbechers in dessen eingesetztem Zustand aufliegen kann. Dies ermöglicht eine Stabilisierung des Verschlussbechers im genannten Zustand.

Eine erfindungsgemäße Küchenmaschine weist insbesondere eine Heizfunktion auf; zusätzlich kann die Küchenmaschine eine oder mehrere wählbare mechanische Bearbeitungsfunktionen haben, beispielsweise eine Rühr-, Misch- und/oder Zerkleinerungsfunktion. Gemäß vorteilhaften Ausführungsformen ist die Küchenmaschine als eine Multifunktionsküchenmaschine bzw. ein Multifunktionskocher ausgebildet.

Die Küchenmaschine umfasst ein Gefäß zum Einfüllen von zu bearbeitendem, insbesondere zu erhitzendem Lebensmittel. Das Gefäß hat einen erfindungsgemäßen Deckel gemäß einer der in dieser Schrift offenbarten Ausführungsformen. Gemäß vorteilhaften Ausführungsvarianten umfasst die Küchenmaschine zudem einen Basisstation mit einer vorgesehenen Gefäßposition, in der das Gefäß zum Betrieb abnehmbar angeordnet werden kann. Mittels der Basisstation kann beispielsweise eine Verbindung zu einer Stromquelle herzustellen sein, und/oder die Basisstation kann zum Einstellen einer jeweiligen Funktion dienen. Der Deckelkranz des Deckels kann beispielsweise als separates Element losgelöst vom Gefäß und der Basisstation ausgebildet oder mittels mindestens eines Scharniers mit dem Gefäß bzw. der Basisstation verbunden sein.

Gemäß vorteilhaften Ausführungsformen der vorliegenden Erfindung steht der Kragen des Verschlussbechers mindestens bereichsweise weiter von der Becherwand ab als die Barrierestege. Insbesondere ist eine Breite B, um die der Kragen in mindestens einem Bereich von der Becherwand absteht, vorzugsweise größer als eine Breite b, um die die Barrierestege jeweils (maximal) von der Becherwand abstehen. Bei geeignetem Deckelkranz mit runder Öffnung können dann die Barrierestege mit in die Öffnung eingesetzt werden, wohingegen der Kragen den Deckelkranz im Bereich der Öffnung vorzugsweise teilweise überragt, insbesondere einen Spalt zwischen Verschlussbecher und Deckelkranz mindestens teilweise abdeckt und so dort ein Austreten von Dampf verhindert oder zumindest reduziert.

Bei einem erfindungsgemäßen Deckel deckt entsprechend der Kragen des Verschlussbechers in dessen eingesetztem Zustand vorzugsweise einen Spalt zwischen dem Verschlussbecher und dem Deckelkranz mindestens teilweise ab. Die mindestens zwei Barrierestege sind im eingesetzten Zustand vorzugsweise durch die Öffnung hindurchgeführt; in Ausführungsformen, bei denen die Öffnung wie oben beschrieben von einem Aufnahmeschacht ausgebildet wird, sind die Barrierestege im eingesetzten Zustand des Verschlussbechers vorzugsweise zumindest teilweise im Aufnahmeschacht angeordnet; die oben erläuterte Einschränkung des Dampfstroms erfolgt damit mindestens teilweise im Aufnahmeschacht. Die Barrierestege können dabei vorzugsweise zumindest in einem jeweiligen Abschnitt an dem den Aufnahmeschacht begrenzenden Rand des Deckelkranzes anliegen; dadurch entsteht eine besonders gute Abdichtung, die verhindert, dass Dampf außen an den Barrierestegen vorbei in den Dampfdurchlassbereich vordringen kann.

Der Verschlussbecher kann als Messbecher mit einer oder mehreren Messskala/ -skalen (z.B. an der Innen- und/oder Außenseite der Becherwand) ausgebildet sein. Damit weist der Verschlussbecher eine Doppelfunktion auf und ermöglicht (neben dem Verschluss der Öffnung mit kontrolliertem Dampfaustritt) insbesondere ein vereinfachtes präzises Zugeben von Zutaten, beispielsweise während des Verwendens der Heizfunktion durch die Öffnung im Deckelkranz hindurch.

Gemäß vorteilhaften Ausführungsformen weist der Verschlussbecher einen Ausguss auf; ein solcher ist dann vorzugsweise im Dampfdurchlassbereich angeordnet. Der Ausguss kann insbesondere nach außen (also entgegengesetzt zum Inneren des Verschlussbechers) spitz oder rund zulaufend ausgebildet sein und/oder einen heruntergebogenen Rand aufweisen, beispielsweise als Schnaupe ausgebildet sein. Der Verschlussbecher ermöglicht so eine erleichterte Verwendung zum Zugeben flüssiger Zutaten, darüber hinaus bietet der Ausguss eine Abweichung in der Form des Verschlussbechers, in die der Dampfdurchlassbereich auf besonders einfache Art integriert werden kann.

Gemäß vorteilhaften Ausführungsformen weist ein erfindungsgemäßer Verschlussbecher in seinem Einsetzbereich (zwischen dem Becherboden und dem Kragen) eine Becherwand auf, die zumindest teilweise entlang (z.B. in einem Abstand von höchstens 3mm, höchstens 2mm oder höchstens 1mm) einer (abstrakten) rotationssymmetrischen Fläche verläuft, beispielsweise einer Mantelfläche eines Kreiszylinders oder eines Kreiskegels oder entlang einer Ellipsoid- oder Torusfläche: Die Becherwand hat dann also eine Form, die eine Konstruktion der genannten Fläche benachbart zu einem Teil der Becherwand erlaubt. Dabei ist der Einsetzbereich des Verschlussbechers vorzugsweise innerhalb dieser rotationssymmetrischen Fläche (bevorzugt frei) drehbar. Bei einem (den Deckelkranz umfassenden) erfindungsgemäßen Deckel kann die genannte rotationssymmetrische Fläche insbesondere durch einen Rand des Deckelkranzes physisch realisiert sein, der wie oben erwähnt einen Aufnahmeschacht begrenzen kann.

Gemäß vorteilhaften Varianten weicht der Einsetzbereich dabei selbst nur durch die nach außen abstehenden Barrierestege von einer rotationssymmetrischen Form ab. Alternativ kann der Einsetzbereich (zusätzlich zu durch die Barrierestege gegebenen Abweichungen) im Vergleich zu einer rotationssymmetrischen Form mindestens eine Einbuchtung zur Rotationssymmetrieachse hin aufweisen, beispielsweise im Dampfaustrittsbereich: Im eingesetzten Zustand weist der Verschlussbecher dann in diesem Bereich einen vergrößerten Abstand zum Deckelkranz auf, so dass dort mehr Dampf entweichen kann.

Die geometrische Form dieser Ausführungsformen ermöglicht somit, dass der Verschlussbecher in Verwendung und Kombination mit einem geeigneten Deckelkranz mit runder Öffnung in eingesetztem Zustand verdreht werden kann. Insbesondere kann so der Dampfdurchlassbereich des Verschlussbechers an eine jeweils vorteilhafte Position gedreht werden. So kann der Verwender den Verschlussbecher auf einfache, unbestimmte Weise einsetzen und die Positionierung des Dampfdurchlassbereichs erst danach jeweils wunschgemäß anpassen.

Der Verschlussbecher kann eine innere Kuppe aufweisen, die sich in einem (vorzugsweise zentralen) Bereich des Becherbodens erheben kann; in diesem Fall ist der Becherboden vorzugsweise ringartig ausgebildet. Eine solche Kuppe ermöglicht ein vorteilhaft kleines Innenvolumen (und - in entsprechenden Ausführungsformen - eine besonders große und damit deutliche Messskala) des Verschlussbechers bei relativ großem äußerem Rand, so dass also eine entsprechend große, zum Einfüllen von Zutaten vorteilhafte Öffnung im Deckelkranz mit dem Verschlussbecher geschlossen werden kann.

In Ausführungsformen eines erfindungsgemäßen Deckels, bei denen die Öffnung im Deckelkranz durch einen Aufnahmeschacht gebildet wird und bei denen (wie oben erwähnt) am den Aufnahmeschacht begrenzenden Rand eine Gitterstruktur ausgebildet ist, kann diese bei solchen Varianten (Verschlussbecher mit innerer Kuppe) eine zentrale Erhebung umfassen, auf die der Verschlussbecher mit seiner inneren Kuppe aufzustülpen ist.

Der Kragen des Verschlussbechers erstreckt sich vorzugsweise entlang einer Ebene, die beispielsweise parallel zum Becherboden liegen kann und/oder von der die Barrierestege abgewinkelt sein können, beispielsweise (in einem Kontaktbereich von Ebene und Barrierestegen) mit einem Winkel im Bereich von 70° bis 110° oder 80° bis 100°, insbesondere rechtwinklig. Der Kragen kann insbesondere als mindestens ein Abschnitt (Sektor) einer Ringscheibe ausgebildet sein.

Gemäß vorteilhaften Ausführungsvarianten sind der Kragen und die Barrierestege als ein zusammenhängender Vorsprung an der Becherwand ausgebildet. Insbesondere kann je ein Ende des Kragens in einen der Barrierestege übergehen. Dadurch wird eine besonders gute Dampfführung am Kragen und von dort am jeweiligen Barrieresteg entlang in das Gefäßinnere ermöglicht.

Im Folgenden werden bevorzugte Ausführungsbeispiele der Erfindung anhand zweier Zeichnungen näher erläutert. Es versteht sich, dass einzelne Elemente und Komponenten auch anders kombiniert werden können als dargestellt und dass reale Größenverhältnisse von den gezeigten abweichen können. Bezugszeichen für einander entsprechende Elemente sind figurenübergreifend verwendet und werden ggf. nicht für jede Figur neu beschrieben.

Es illustrieren
- Figur 1:: den Aufbau einer exemplarischen Ausführungsform einer erfindungsgemäßen Küchenmaschine; und
- Figur 2:: die Funktionsweise eines erfindungsgemäßen Verschlussbechers.

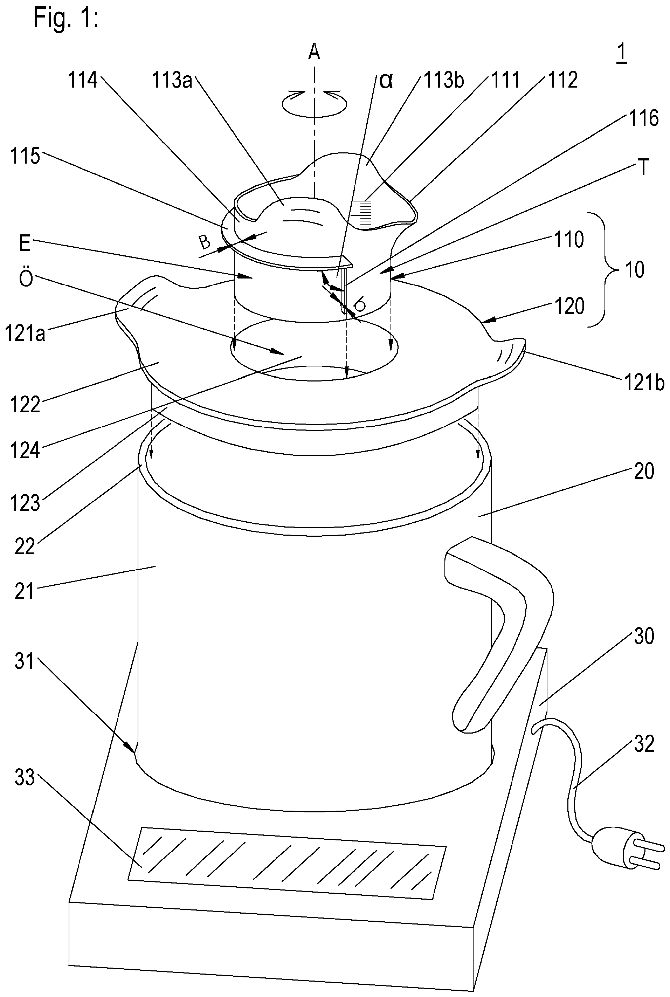

In Figur 1 ist in perspektivischer Ansicht ein Ausführungsbeispiel einer erfindungsgemäßen Küchenmaschine 1 schematisch dargestellt. Diese umfasst eine Basisstation 30 und ein vorliegend in einer Aufnahme 31 der Basisstation 30 positioniertes Gefäß 20 mit einem erfindungsgemäßen Deckel 10.

Die Küchenmaschine 1 weist dabei eine Heizfunktion auf: Mittels eines Elektroanschlusses 32 der Basisstation 30 kann eine in der Figur 1 nicht sichtbare Heizvorrichtung aktiviert werden.

Eine derartige Heizvorrichtung kann eine in der Basisstation 30 und/oder eine im Fuß des Gefäßes 20 angeordnete Heizwendel umfassen; im letzteren Fall können die Aufnahme 31 und das Gefäß 20 jeweils Kontakte umfassen, die durch Positionieren des Gefäßes 20 in der Aufnahme 31 geschlossen werden, so dass die Heizwendel dann mittels des Elektroanschlusses 32 mit einer Stromquelle verbunden werden kann.

Zusätzlich zur Heizfunktion kann die Küchenmaschine 1 vorzugsweise weitere Funktionen wie z.B. eine oder mehrere wählbare mechanische Bearbeitungsfunktionen haben, beispielsweise eine Rühr-, Misch- und/oder Zerkleinerungsfunktion. Dazu kann sie einen (nicht dargestellten) Elektromotor umfassen, der beispielsweise im Inneren der Basisstation angeordnet und mittels einer in der Aufnahme 31 befindlichen Kupplung mit einem (ebenfalls nicht sichtbaren) Bearbeitungswerkzeug im Inneren des Gefäßes 20 zu verbinden sein kann, wenn das Gefäß - wie im dargestellten Fall - in der Aufnahme 31 positioniert und damit in seine vorgesehene Verwendungsposition gebracht wurde.

Eine Anzeigevorrichtung 33 an der Basisstation 30 ist in der dargestellten Ausführungsvariante insbesondere dazu eingerichtet, dem Verwender Informationen über die Zubereitung einer jeweiligen Speise und/oder einen jeweiligen Status der Küchenmaschine zu vermitteln. Vorzugsweise ist die Anzeigevorrichtung berührungssensitiv, so dass mit ihr Eingaben des Verwenders entgegengenommen werden können. Alternativ oder zusätzlich kann die Basisstation mindestens einen (nicht dargestellten) Stellknopf und/oder Schalter umfassen.

Insbesondere kann die Küchenmaschine 1 vorzugsweise als eine Multifunktionsküchenmaschine bzw. ein Multifunktionskocher ausgebildet sein.

Der Deckel 10 für das Gefäß 20 der Küchenmaschine 1 umfasst einen erfindungsgemäßen Verschlussbecher 110 und einen Deckelkranz 120, der vorliegend als separates, relativ zur Basisstation und zum Gefäß also frei bewegliches Teil ausgebildet ist.

Der Deckelkranz 120 umfasst Griffelemente 121a, 121b zum erleichterten Abnehmen und Aufsetzen des Deckelkranzes auf das Gefäß 20.

Im gezeigten Ausführungsbeispiel erfolgt das Aufsetzen direkt auf dessen Gefäßrand 22; gemäß alternativen Ausführungsformen kann ein erfindungsgemäßer Deckel einen relativ zum Gefäß und/oder der Basisstation klappbaren Schließring umfassen, in den der Deckelkranz einzusetzen und mit dem zusammen er auf das Gefäß aufzusetzen (zu klappen) ist (nicht dargestellt).

Der gezeigte Deckelkranz 120 umfasst eine Abdeckfläche 122, die in einem Zustand, in dem der Deckelkranz wie angegeben auf das Gefäß 20 aufgesetzt wurde, dessen (vorliegend aufgrund der Perspektive nicht sichtbaren) Gefäßboden entgegengesetzt ist.

Von der Abdeckfläche 122 steht im dargestellten Ausführungsbeispiel ein äußerer Stabilisierungs- und Abdichtungsrand 123 ab, der dazu eingerichtet ist, im besagten aufgesetzten Zustand des Deckelkranzes an einer Gefäßwand 21 entlang zu verlaufen und dort ein Austreten von bei Verwendung der Küchenmaschine auftretendem Dampf zu verhindern oder zumindest zu vermindern; insbesondere steht der Stabilisierungs- und Abdichtungsrand 123 im genannten Zustand in Richtung des Gefäßbodens (also zu diesem hin) von der Abdeckfläche 122 ab und ist als eine Mantelfläche eines Kreiszylinders geformt.

Die (vorliegend runde und zentral angeordnete) Öffnung Ö im Deckelkranz 120 wird durch einen Aufnahmeschacht ausgebildet, in den der Verschlussbecher 110 (wie in der Figur 1 durch Pfeile angegeben) eingesetzt werden kann. Der Aufnahmeschacht wird durch einen weiteren umlaufenden Rand 124 begrenzt, der im aufgesetzten Zustand des Deckelkranzes 120 ebenfalls ins Gefäßinnere hinein von der Abdeckfläche 122 absteht.

Bei Verwendung der Heizfunktion der Küchenmaschine 1 unterdrückt dieser Rand 124 flache Dampfströmungen entlang einer Unterseite der Abdeckfläche 122 und durch die Öffnung Ö hindurch in einen Bereich oberhalb der Küchenmaschine: Derartige flache Dampfströmungen führen in oft vom Verwender angefasste Bereiche an der Peripherie des Gefäßes bzw. des Deckels 10, beispielsweise zu den Griffelementen 121a, 121b des Deckelkranzes 120 und bergen daher die Gefahr von Verbrennungen.

Der Verschlussbecher 110 ist vorliegend als ein Messbecher mit einer Messskala 111, einem Ausguss 112 und zwei Griffelementen 113a, 113b ausgebildet. Er weist einen (in der Figur 1 aufgrund der Perspektive nicht sichtbaren) runden Becherboden sowie eine Becherwand 114 auf, von der ein Kragen 115 und zwei Barrierestege (von denen aufgrund der Perspektive nur der Barrieresteg 116 sichtbar ist) nach außen abstehen. Im in den Deckelkranz 120 eingesetzten Zustand ist der Verschlussbecher 110 mit seinem Einsetzbereich E vom Becherboden bis zum Kragen 115 in der Öffnung Ö (bzw. dem sie ausbildenden Aufnahmeschacht) versenkt (in der Figur 1 nicht dargestellt).

Der Kragen 115 erstreckt sich entlang einer Ebene parallel zum Becherboden (und damit vorliegend horizontal). Er umläuft die Becherwand 114 teilweise und ist in einem vorgesehenen Dampfdurchlassbereich T, in dem in der gezeigten Ausführungsform (weiter oben) auch der Ausguss angeordnet ist, unterbrochen. An den beiden Enden geht der Kragen 115 in je einen der Barrierestege 116 über, die jeweils vom Kragen ausgehend zum Becherboden hin verlaufen, vorliegend ohne diesen zu erreichen: Insbesondere erstrecken sich die Barrierestege im gezeigten Beispiel jeweils um etwa 80% eines Abstandes vom Kragen zum Becherboden hin, damit liegt ihre Ausdehnung in diese Richtung (zum Becherboden hin) in einem vorteilhaften Bereich von mindestens 50% oder mindestens 60% und/oder höchstens 85% oder höchstens 75% des genannten Abstandes.

Dabei sind die Barrierestege 116 im dargestellten Ausführungsbeispiel gerade ausgebildet und von der Ebene, entlang der sich der Kragen 115 erstreckt, um einen Winkel α abgewinkelt; der Winkel α liegt dabei vorteilhaft im Bereich von 70° bis 110°, sogar im Bereich bis 80° bis 100°, insbesondere gilt im gezeigten Fall α = 90°.

Der Kragen 115 steht um eine Breite B und die Barrierestege 16 stehen um eine Breite b von der Becherwand ab; dabei ist b<B. Insbesondere sind die Barrierestege 16 Teil des Einsetzbereichs E des Verschlussbechers, sind also in dessen eingesetzten Zustand in der Öffnung Ö bzw. im Aufnahmeschacht versenkt (vorzugsweise liegen sie dabei am Rand 124 an). Demgegenüber ist der Kragen 115 im genannten Zustand oberhalb (teils auf) der Abdeckfläche 122 des Deckelkranzes 120 angeordnet, deckt dabei einen Spalt zwischen der Becherwand 114 und dem Rand 124 des Aufnahmeschachts ab und verhindert oder zumindest vermindert im Betrieb der Küchenmaschine 1 einen Dampfaustritt durch den Spalt hindurch.

Die Becherwand 114 im Einsetzbereich E verläuft im eingesetzten Zustand des Verschlussbechers entlang der durch den Rand 124 physisch realisierten Mantelfläche eines Kreiszylinders mit Zylinder- bzw. Rotationssymmetrieachse A; ein Abstand zwischen der Becherwand und dem Rand 124 beträgt dabei vorzugsweise höchstens 3mm, höchstens 2mm oder höchstens 1mm. Insbesondere weicht der Einsetzbereich E des Verschlussbechers 110 im dargestellten Ausführungsbeispiel nur durch die Barrierestege von einer rotationssymmetrischen Form ab.

Damit ist der Einsetzbereich E vorliegend innerhalb der genannten Mantelfläche (und damit im Aufnahmeschacht) um die Rotationssymmetrieachse A (vorzugsweise frei (um 360° und/oder beide Richtungen)) drehbar. Der Verschlussbecher kann daher im in den Deckelkranz eingesetzten Zustand so verdreht werden, dass der Dampfaustrittsbereich am Ausguss geeignet eine jeweils vorteilhafte Position hat, beispielsweise weg von den Griffelementen 121a, 121b weist.

Eine Rotationsachse eines im Inneren des Gefäßes 20 vorzugsweise montierbaren Bearbeitungswerkzeugs stimmt vorzugsweise mit der Rotationssymmetrieachse A überein.

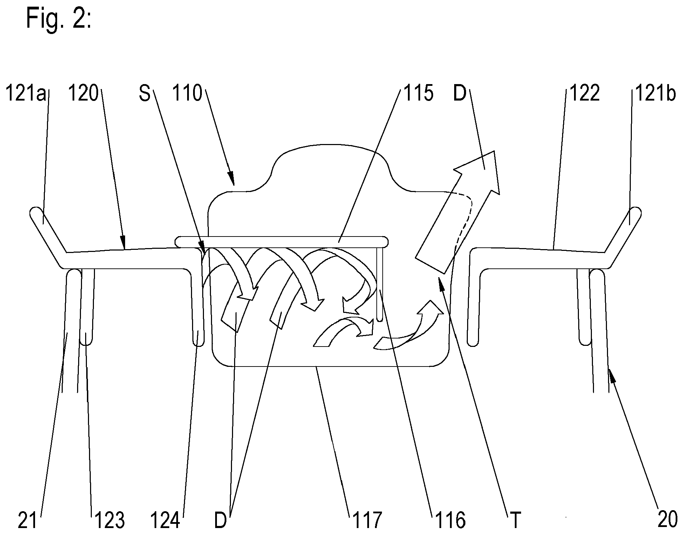

Die Funktionsweise des Verschlussbechers 110 wird anhand der Figur 2 erläutert, die einen Verschlussbecher 110 mit einem Becherboden 117, einem Kragen 115 und zwei Barrierestegen 116 (von denen wiederum nur einer sichtbar ist) von einer Seite zeigt. Der Verschlussbecher ist dabei in einem in einen Deckelkranz 120 eingesetzten Zustand, und der Deckelkranz ist auf ein (in der Figur 2 nur teilweise sichtbares) Gefäß 20 aufgesetzt; zur Darstellbarkeit des Verschlussbechers sind der Deckelkranz 120 und die Gefäßwand 21 jeweils in einer Schnittansicht gezeigt.

In der gezeigten Verwendung des Verschlussbechers 110 wird die Heizfunktion der Küchenmaschine genutzt und ein Lebensmittel erhitzt, so dass Dampf D entsteht und der Druck im Gefäß sich erhöht. Der überwiegende Teil des aufsteigenden Dampfes wird von der Unterseite der Abdeckfläche 122 des Deckelkranzes 120 und vom Becherboden 117 des Verschlussbechers nach unten zurückgeworfen (nicht dargestellt), lediglich ein Teil des Dampfes dringt in einen Spalt S zwischen dem Verschlussbecher 110 und dem Deckelkranz (am Rand 124 des Aufnahmeschachtes) ein.

Der Dampf wird dort vom Kragen 115 zurück ins Innere des Gefäßes hinein reflektiert, lediglich in einem Dampfdurchlassbereich T ist ein Entweichen des Dampfes zum Druckausgleich möglich. Die Barrierestege 116 verhindern nun, dass infolge der Druckdifferenz ein flacher Dampfstrom entlang der Unterseite des Kragens 115 in den Dampfdurchlassbereich T entsteht. Vielmehr kann Dampf nur steil von unterhalb der Barrierestege 116 in den Dampfdurchlassbereich T einströmen. Dies hat zur Folge, dass der Dampf auch beim darauffolgenden ungehinderten Entweichen steil nach oben strömt. Beispielsweise ein vor der Küchenmaschine stehender Verwender, die Griffelemente 121a, 121b des Deckelkranzes oder andere Objekte werden daher nicht direkt vom Dampfstrom getroffen, so dass ein Verletzungsrisiko des Verwenders verringert und die Gebrauchssicherheit der Küchenmaschine verbessert ist.

Offenbart ist ein Verschlussbecher 110 für eine Küchenmaschine 1 mit Heizfunktion. Der Verschlussbecher ist dazu eingerichtet, mit einem Einsatzbereich E in eine Öffnung Ö eines Deckelkranzes 120 für ein Gefäß der Küchenmaschine eingesetzt zu werden. Er umfasst einen von seiner Becherwand 114 nach außen abstehenden Kragen 115, der in mindestens einem vorgesehenen Dampfdurchlassbereich T an der Becherwand 114 unterbrochen und/oder zumindest verschmälert ist. Von der Becherwand stehen zudem mindestens zwei Barrierestege 116 nach außen ab, die von dem Kragen 115 ausgehend zum Becherboden 117 hin verlaufen.

Offenbart sind weiterhin ein Deckel 10 für ein Gefäß 20 einer Küchenmaschine 1, wobei der Deckel einen Deckelkranz 120 und einen erfindungsgemäßen Verschlussbecher 110 umfasst, und eine Küchenmaschine 1 mit einem Gefäß 20 und einem solchen Deckel 10.

### Bezugszeichen

- 1: Küchenmaschine

- 10: Deckel

- 20: Gefäß
- 21: Gefäßwand
- 22: Gefäßrand

- 30: Basisstation
- 31: Aufnahme für das Gefäß 20
- 32: Elektroanschluss
- 33: Anzeige

- 110: Verschlussbecher
- 111: Messskala
- 112: Ausguss
- 113a, 113b: Griffelemente am Verschlussbecher
- 114: Becherwand
- 115: Kragen
- 116: Barrieresteg

- 120: Deckelkranz
- 121a, 121b: Griffelemente am Deckelkranz 120
- 122: Abdeckfläche
- 123: Stabilisierungs- und Abdichtungsrand 123
- 124: Rand des die Öffnung Ö ausbildenden Aufnahmeschachtes

- A: Zylinder- bzw. Rotationssymmetrieachse
- b: Breite eines Barrierestegs 116
- B: Breite des Kragens 115
- D: Dampf
- Ö: Öffnung
- S: Spalt zwischen Verschlussbecher 110 und Deckelkranz 120
- T: Durchlassbereich

## Patentansprüche

1. Verschlussbecher (110) zum Einsatz in eine Öffnung (Ö) eines Deckelkranzes (120) einer Küchenmaschine (1), die eine Heizfunktion aufweist,
wobei der Verschlussbecher (110) einen von seiner Becherwand (114) nach außen abstehenden Kragen (115) aufweist, der in mindestens einem vorgesehenen Dampfdurchlassbereich (T) an der Becherwand (114) unterbrochen und/oder verschmälert ist,
und wobei von der Becherwand zudem mindestens zwei Barrierestege (116) nach außen abstehen, die von dem Kragen (115) ausgehend zum Becherboden (117) hin verlaufen und ein Einströmen von Dampf flach am Kragen (115) entlang in den Dampfdurchlassbereich (T) verhindern.

2. Verschlussbecher gemäß Anspruch 1, wobei der Kragen (115) mindestens bereichsweise weiter von der Becherwand (114) absteht als die Barrierestege (116).

3. Verschlussbecher gemäß einem der Ansprüche 1 oder 2, wobei der Verschlussbecher im Dampfdurchlassbereich (T) einen Ausguss (112) aufweist.

4. Verschlussbecher gemäß einem der vorhergehenden Ansprüche, wobei je ein am Dampfdurchlassbereich (T) angeordnetes Ende des Kragens (115) in einen der Barrierestege (116) übergeht.

5. Verschlussbecher gemäß einem der vorhergehenden Ansprüche, der mindestens ein Griffelement (113a, 113b) hat.

6. Verschlussbecher gemäß einem der vorhergehenden Ansprüche, der eine Becherwand (114) aufweist, die zumindest bereichsweise entlang einer abstrakten rotationssymmetrischen Fläche verläuft, innerhalb deren ein vom Becherboden (117) zum Kragen (115) reichender Einsetzbereich (E) des Verschlussbechers drehbar ist.

7. Deckel (10) für ein Gefäß (20) einer Küchenmaschine (1) mit Heizfunktion, wobei der Deckel (10) einen Verschlussbecher (110) gemäß einem der vorhergehenden Ansprüche sowie einen Deckelkranz (120) zum Aufsetzen auf das Gefäß (20) umfasst, wobei der Verschlussbecher (110) dazu eingerichtet ist, in eine Öffnung (Ö) des Deckelkranzes (120) eingesetzt zu werden.

8. Deckel gemäß Anspruch 7, wobei der Verschlussbecher (110) in seinem eingesetzten Zustand im Deckelkranz (120) drehbar ist.

9. Deckel gemäß einem der Ansprüche 7 oder 8, wobei der Kragen (115) im eingesetzten Zustand des Verschlussbechers einen Spalt (S) zwischen dem Verschlussbecher (110) und dem Deckelkranz (120) mindestens teilweise abdeckt.

10. Küchenmaschine (1) mit Heizfunktion, wobei die Küchenmaschine ein Gefäß (20) mit einem Deckel (10) umfasst, der gemäß einem der Ansprüche 7 bis 9 ausgebildet ist.

## Claims

1. Closure container (110) for insertion into an opening (Ö) of a lid rim (120) of a kitchen appliance (1) having a heating function,
wherein the closure container (110) has a collar (115) protruding outwards from its container wall (114), which collar is discontinuous and/or narrower in at least one provided steam outlet region (T) on the container wall (114),
and wherein in addition at least two barrier webs (116) protrude outwards from the container wall, which barrier webs run from the collar (115) towards the container base (117) and prevent steam from flowing in a planar manner along the collar (115) into the steam outlet region (T).

2. Closure container according to claim 1, wherein the collar (115) protrudes at least in regions further from the container wall (114) than the barrier webs (116).

3. Closure container according to one of claims 1 or 2, wherein the closure container has an outlet (112) in the steam outlet region (T).

4. Closure container according to one of the preceding claims, wherein in each case an end of the collar (115) arranged at the steam outlet region (T) transitions into one of the barrier webs (116).

5. Closure container according to one of the preceding claims, which has at least one handle element (113a, 113b).

6. Closure container according to one of the preceding claims, which has a container wall (114) which runs at least in regions along an abstract rotationally symmetrical surface, within which an insertion region (E) of the closure container reaching from the container base (117) to the collar (115) is rotatable.

7. Lid (10) for a vessel (20) of a kitchen appliance (1) with a heating function, wherein the lid (10) comprises a closure container (110) according to one of the preceding claims and a lid rim (120) for placement onto the vessel (20), wherein the closure container (110) is configured to be inserted into an opening (Ö) of the lid rim (120).

8. Lid according to claim 7, wherein in its inserted state the closure container (110) is rotatable in the lid rim (120).

9. Lid according to one of claims 7 or 8, wherein in the inserted state of the closure container the collar (115) at least partially covers a gap (S) between the closure container (110) and the lid rim (120).

10. Kitchen appliance (1) with a heating function, wherein the kitchen appliance comprises a vessel (20) with a lid (10), which is embodied according to one of claims 7 to 9.

## Revendications

1. Gobelet de fermeture (110) destiné à être inséré dans une ouverture (Ö) d'une couronne de couvercle (120) d'un robot de cuisine (1), qui comprend une fonction de chauffage,
dans lequel le gobelet de fermeture (110) comprend une collerette (115) saillant vers l'extérieur à partir de sa paroi de gobelet (114), qui est interrompue et/ou rétrécie au niveau de la paroi de gobelet (114) dans au moins une zone de passage de vapeur (T) prévue,
et dans lequel en outre au moins deux nervures de barrière (116) font saillie vers l'extérieur à partir de la paroi de gobelet, lesquelles s'étendent à partir de la collerette (115) jusqu'au fond du gobelet (117) et empêchent un écoulement de vapeur à plat sur la collerette (115) le long de la zone de passage de vapeur (T).

2. Gobelet de fermeture selon la revendication 1, dans lequel la collerette (115) fait saillie à partir de la paroi de gobelet (114) au moins par sections plus loin que les nervures de barrière (116).

3. Gobelet de fermeture selon l'une des revendications 1 ou 2, dans lequel le gobelet de fermeture comprend un bec verseur (112) dans la zone de passage de vapeur (T).

4. Gobelet de fermeture selon l'une des revendications précédentes, dans lequel chaque extrémité respective de la collerette (115) disposée au niveau de la zone de passage de vapeur (T) se raccorde dans une des rainures de barrière (116).

5. Gobelet de fermeture selon l'une des revendications précédentes, qui possède un élément de préhension (113a, 113b).

6. Gobelet de fermeture selon l'une des revendications précédentes, qui comprend une paroi de gobelet (114), qui s'étend au moins par sections le long d'une surface abstraite symétrique en rotation, à l'intérieur de laquelle une partie d'insertion (E) du gobelet de fermeture s'étendant du fond du gobelet (117) à la collerette (115) peut tourner.

7. Couvercle (10) pour un récipient (20) d'un robot de cuisine (1) ayant une fonction de chauffage, dans lequel le couvercle (10) comprend un gobelet de fermeture (110) selon l'une des revendications précédentes ainsi qu'une couronne de couvercle (120) destinée à être posée sur le récipient (20), dans lequel le gobelet de fermeture (110) est conçu pour être inséré dans une ouverture (Ö) de la couronne de couvercle (120).

8. Couvercle selon la revendication 7, dans lequel le gobelet de fermeture (110) peut tourner dans son état inséré dans la couronne de couvercle (120).

9. Couvercle selon l'une des revendications 7 ou 8, dans lequel la collerette (115), dans l'état inséré du gobelet de fermeture, recouvre au moins en partie un interstice (S) entre le gobelet de fermeture (110) et la couronne de couvercle (120).

10. Robot de cuisine (1) comprenant une fonction de chauffage, dans lequel le robot de cuisine comprend un récipient (20) comprenant un couvercle (10), qui est configuré selon l'une des revendications 7 à 9.
